Europäisches Patentamt

(19) European Patent Office

Office européen des brevets

(11) Numéro de publication: **0 148 682**
**B1**

(12) # FASCICULE DE BREVET EUROPÉEN

(45) Date de publication du fascicule du brevet:
22.07.87

(51) Int. Cl.⁴: **F 16 D 3/00,** F 16 D 3/16,
F 16 D 3/20

(21) Numéro de dépôt: 84402600.5

(22) Date de dépôt: 14.12.84

(54) Joint de transmission élastique.

(30) Priorité: 23.12.83 FR 8320658

(43) Date de publication de la demande:
17.07.85 Bulletin 85/29

(45) Mention de la délivrance du brevet:
22.07.87 Bulletin 87/30

(84) Etats contractants désignés:
BE DE GB IT NL SE

(56) Documents cité:
FR-A-730 595
FR-A-2 324 939
FR-A-2 452 512
GB-A-222 563
US-A-3 453 841

(73) Titulaire: COMPAGNIE DES PRODUITS
INDUSTRIELS DE L'OUEST (C.P.I.O.), Boîte
Postale 1226 Zone Industrielle de Nantes
Carquefou, F-44023 Nantes Cedex (FR)

(72) Inventeur: Gallas, Gérard, 46, boulevard des Poilus,
F-44300 Nantes (FR)
Inventeur: Renzo, Bernard, 12, avenue de
l'Archipel, F-44300 Nantes (FR)

(74) Mandataire: Ernst- Schonberg, Michel, REGIE
NATIONALE DES USINES RENAULT (S. 0004),
F-92109 Boulogne Billancourt Cedex (FR)

LIBER, STOCKHOLM 1987

## Description

L'invention concerne un joint de transmission élastique destiné à être interposé entre un arbre menant et un arbre mené, qui comporte un support d'axe d'articulation solidaire de l'un desdits arbres, un élément élastique intermédiaire relié à l'autre arbre et une tête d'articulation percée d'une fente bidivergente solidaire de l'un desdits arbres, et qui est traversée par l'axe d'articulation, dans lequel la tête d'articulation constitue le logement de deux blocs élastiques qui délimitent la fente bidivergente, et de deux plans conformés à ladite fente et portés par lesdits blocs élastiques, ces derniers délimitant le passage de l'axe d'articulation suivant le brevet FR-A-2 324 939.

La transmission du couple entre l'arbre menant et l'arbre mené favorise le glissement de l'axe d'articulation et la formation d'une pression de contact élevée sur la paroi du logement de l'axe. Il s'ensuit que le logement se déforme progressivement sous l'action des pressions de contact et que le jeu de fonctionnement augmente. L'invention a pour objet d'apporter une solution au problème ainsi posé.

Conformément à l'invention, chaque plan est adjacent à un coussinet support de l'axe d'articulation de configuration générale plane sur lequel une face porte le logement semi-cylindrique de l'axe tandis que l'autre face constitue une surface de glissement en contact avec l'élement élastique.

Dans le joint de transmission ainsi modifié, le contact de pression est réparti sur la surface de glissement du coussinet ainsi que sur la surface support de l'axe d'articulation.

D'autres caractéristiques et avantages de l'invention ressortiront de la description qui va suivre en référence au dessin annexé dans lequel:
- la figure 1 est une vue en coupe longitudinale du joint;
- la figure 2 est une représentation à une plus grande échelle de l'axe d'articulation placé entre les coussinets supports;
- les figures 3, 4 sont des vues perspectives de deux variantes de réalisation du coussinet;
- la figure 5 est une vue en bout du mode de montage du coussinet représenté à la figure 4;
- la figure 6 est une section du montage représenté à la figure 5 suivant le plan 6 - 6 de cette figure;
- la figure 7 représente une vue en coupe longitudinale d'une variante de réalisation du joint utilisant le montage de coussinets de la figure 5.

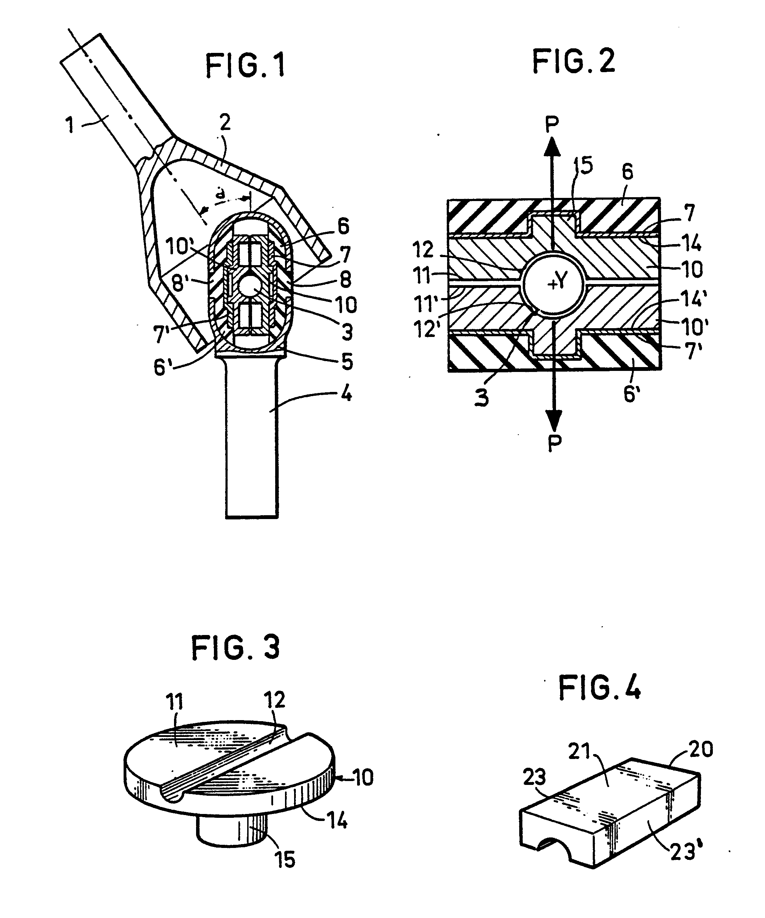

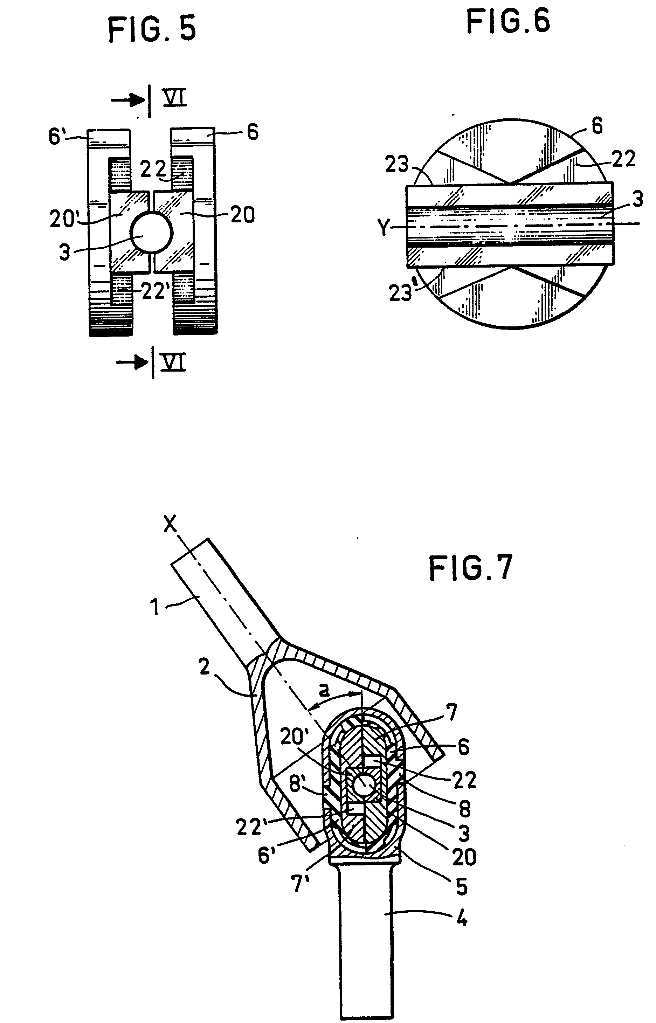

Le joint de transmission, objet de la présente invention, est décrit sur la figure 1 ou 7. Il permet la transmission de mouvement entre un arbre menant 1 et un arbre mené 4. Un support tel qu'une chape ou une pièce en forme de cloche 2 est solidaire de l'arbre 1 et supporte l'axe d'articulation 3. Cet axe 3 peut être immobilisé par rapport à la pièce 2. Il peut également être libre de tourner autour de son axe longitudinal.

L'axe d'articulation 3 est immobilisé dans le sens axial, par exemple à l'aide de circlips non représentés. L'arbre mené 4 comporte à son extrémité une tête d'articulation creuse 5 réalisée a partir d'une tôle cintrée qui constitue le logement des éléments élastiques.

Ceux-ci sont constitués de blocs en élastomère 6 et 6' adhérisés à deux plaques 7 et 7' dont les faces planes en regard servent de plans de glissement. Les plaques 7, 7' sont liées aux éléments élastiques 6, 6' par collage, par adhésion ou même simplement par contact. Les éléments élastiques sont maintenus dans la tête 5 par accrochage mécanique, à l'aide de pions 8 et 8' par exemple. Ils peuvent être également collés ou adhérés à la paroi intérieure de la tête 5.

Selon l'invention, chaque plaque 7, 7' est adjacente à un coussinet 10, 10' support de l'axe d'articulation 3. Chacun des coussinets 10 ou 10' est de configuration générale plane dont la face 11 ou 11', tournée vers l'axe 3, porte le logement semi-cylindrique 12 ou 12' de l'axe 3, l'autre face 14 ou 14' constituant une surface de glissement en contact avec la plaque 7 ou 7'.

Selon le mode de réalisation représenté à la figure 3, les coussinets 10, 10' ont une forme générale de disque dont la face de glissement 14, 14' porte un pion d'articulation 15 engagé dans l'élément élastique correspondant 6 ou 6'.

Selon le mode de réalisation représenté aux figures 4 à 6, le coussinet 20 ou 20' possède une forme générale de patin dont la face de glissement 21 ou 21' repose sur le fond de mortaises bidivergentes 22, 22' portées respectivement par les éléments élastiques 6, 6', la partie médiane retrécie de l'ensemble des mortaises 22, 22' étant en contact avec les faces latérales opposées 23, 23' du patin 20 ou 20'.

En se reportant plus particulièrement à la figure 2 qui illustre le mode de montage des coussinets 10, 10' et de l'axe d'articulation 3 dans le joint de transmission on voit que la pression de contact P se répartit sur la face de glissement 14 ou 14' ainsi que le long de la surface du logement 12 ou 12' de sorte que le niveau maximal de la pression de contact de l'axe 3, au cours de la transmission d'un couple de rotation, reste inférieur à la pression de contact décelable sur le joint antérieurement connu par le brevet FR-A-2 324 939. En raison du faible niveau de pression de contact constaté, les coussinets peuvent être réalisés dans un matériau à faible coefficient de frottement tel qu'une matière plastique, comme un polyamide 6 x 6 chargé au bisulfure de molybdène, une résine acétal ou une fine pellicule de polytétrafluorure d'éthylène. Le coefficient de frottement peut encore être diminué par l'adjonction d'un agent lubrifiant tel que de la graisse. Il est souhaitable dans ce cas de protéger l'ensemble du mécanisme par un soufflet de protection comme mentionné dans le brevet FR-A-2 324 939. Une autre possibilité de réalisation consiste à utiliser pour la fabrication des coussinets 10, 10' et 20, 20' un matériau plastique autolubrifiant, comprenant une charge minérale ou organique connu par la publication
FR-A-2 452 512.

En se reportant aux figures 5 et 6 qui illustrent
le mode de montage des coussinets 20, 20', on
voit que la pression de contact se répartit sur le
fond des mortaises 22, 22' et sur les surfaces du
logement de l'axe. Il y a lieu de noter que le
fonctionnement du joint de transmission est
comparable au fonctionnement du joint objet du
brevet FR-A-2 324 939. En effet, le joint élastique
suivant l'invention transmet, tout en filtrant les
vibrations, un couple de rotation transmis par
l'arbre menant 1 à l'arbre mené 4 ou inversement,
les axes de ceux-ci faisant entre eux un certain
angle (a). Lors de l'application d'un couple de
rotation à l'arbre menant 1, ce dernier entraîne,
par l'intermédiaire de la cloche 2, l'axe 3 en
rotation, cette rotation s'effectuant suivant l'axe
de l'arbre 1, perpendiculairement à l'axe 3. Le
couple de rotation se transforme alors en un
effort de contact de l'axe 3 sur les surfaces des
logements 12 ou 12'. Cet effort de contact est
retransmis à l'élément élastique intéressé 6 ou 6'
par la face 14 ou 14' du coussinet situé du côté
opposé au logement. Sous cet effort, l'élément
élastique est comprimé et se déforme en créant
une reaction élastique qui assure le filtrage des
vibrations mentionné ci-dessus. A travers
l'élément élastique et après filtrage des
vibrations éventuelles, l'effort est appliqué sur la
paroi interne de la tête 5, effort qui se traduit par
un couple transmis à l'arbre mené 4.

Pour obtenir la rigidité en torsion convenable,
on peut modifier l'épaisseur des blocs élastiques
6 et 6', la dureté du mélange caoutchouc employé
ou la précontrainte de serrage.

En raison de l'existence de l'angle géométrique
entre les arbres 1 et 4, l'axe 3 subit divers
mouvements lors de sa rotation:
- un premier mouvement de rotation autour de
l'axe X de l'arbre 1;
- une rotation alternative autour de son propre
axe Y, due au décalage angulaire entre l'arbre
menant et l'arbre mené.

## Revendications

1. Joint de transmission élastique destiné à
être interposé entre un arbre menant (1) et un
arbre mené (4), qui comporte un support (2) d'axe
d'articulation (3) solidaire de l'un (1) desdits
arbres, un élément élastique (6, 6') intermédiaire
relié à l'autre arbre (4) et une tête d'articulation
(5) percée d'une fente bidivertente solidaire de
l'un (4) desdits arbres, et qui est traversée par
l'axe d'articulation (3), dans lequel la tête
d'articulation (5) constitue le logement de deux
blocs élastiques (6, 6') qui délimitent la fente
bidivergente et de deux plans (7, 7') conformés à
ladite fente et portés par lesdits blocs élastiques
(6, 6'), ces derniers délimitant le passage de l'axe
d'articulation (3), caractérisé par le fait que
chaque plan (7, 7') est adjacent à un coussinet (10, 10'- 20, 20') support de l'axe d'articulation (3)
de configuration générale plane sur lequel une
face (11, 11') porte le logement (12 ou 12') semi-
cylindrique de l'axe d'articulation (3) tandis que
l'autre face (14, 14') constitue une surface de
glissement en contact avec le plan porté par le
bloc élastique (6, 6').

2. Joint de transmission selon la revendication
1, caractérisé par le fait que le coussinet (10, 10')
est en forme de disque dont la face de
glissement porte un pion d'articulation (15)
engagé dans l'élément élastique (6, 6').

3. Joint de transmission selon la revendication
1, caractérisé par le fait que le coussinet (20, 20')
est en forme de patin dont la face de glissement
repose sur le fond d'une mortaise bidivergente
(22, 22') portée par l'élément élastique (6, 6') dont
la partie médiane rétrécie (23) est en contact
avec les faces latérales opposées (23, 23') du
patin.

## Patentansprüche

1. Elastische Getriebekupplung zum Einsetzen
zwischen eine antreibende Welle (1) und eine
angetriebene Welle (4), die eine Halterung (2) für
eine Gelenkachse (3) aufweist, welche fest mit
einer (1) der Wellen verbunden ist sowie ein
elastisches Zwischenteil (6, 6'), das mit der
anderen Welle (4) verbunden ist und einen
Gelenkkopf (5), der eine Aussparung aufweist,
die sich bis zu einer (4) der Wellen erstreckt und
der von der Gelenkachse (3) durchsetzt ist, wobei
der Gelenkkopf (5) als Sitz für zwei elastische
Blöcke (6, 6') dient, welche die Aussparung
begrenzen sowie für zwei Ebenen (7, 7') dient, die
an die Aussparung angepaßt sind und von den
elastischen Blöcken (6, 6') getragen sind, wobei
letztere den Durchlaß für die Gelenkachse (3)
begrenzen, dadurch gekennzeichnet, daß jede
Ebene (7, 7') einem Auflager (10, 10' - 20, 20')
benachbart ist zur Halterung der Gelenkachse (3)
von im allgemeinen ebener Ausgestaltung, wobei
eine Fläche (11, 11') den halbzylindrischen Sitz
(12, 12') der Gelenkachse (3) trägt, während die
andere Fläche (14, 14') eine Gleitfläche bildet, die
mit der vom elastischen Block (6, 6') getragenen
Ebene in Berührung steht.

2. Getriebekupplung nach Anspruch 1, dadurch
gekennzeichnet, daß das Auflager (10, 10')
Scheibenform aufweist, deren Gleitfläche einen
Gelenkzapfen (15) trägt, der in das elastische Teil
(6, 6') eingreift.

3. Getriebekupplung nach Anspruch 1, dadurch
gekennzeichnet, daß das Auflager (20, 20')
Kufenform aufweist, deren Gleitfläche auf dem
Boden einer Keilnut (22, 22') ruht, die vom
elastischen Teil (6, 6') getragen ist und deren
zurückgezogener Mittenabschnitt (23) mit den
sich gegenüberliegenden Seitenflächen (23, 23')
der Kufe in Berührung steht.

## Claims

1. An elastic transmission joint intended to be interposed between a driving shaft (1) and a driven shaft (4), which comprises a support (2) for a pivot spindle (3) which is fixed with respect to one (1) of said shafts, an intermediate elastic element (6, 6') connected to the other shaft (4) and a pivot head (5) provided with a bidivergent slot extending therethrough and fixed with respect to one (4) of said shafts and through which extends the pivot spindle (3), in which the pivot head (5) forms the housing for two elastic blocks (6, 6') which delimit the bidivergent slot and two surface members (7, 7') which are shaped in accordance with said slot and which are carried by said elastic blocks (6, 6'), the latter delimiting the passage for the pivot spindle (3), characterised in that each surface member (7, 7') is adjacent to a bearing member (10, 10' - 20, 20') supporting the pivot spindle (3) of a flat general configuration on which a face (11, 11') bears the semi-cylindrical housing (12 or 12') for the pivot spindle (3) while the other face (14, 14') forms a sliding surface in contact with the surface member carried by the elastic block (6, 6').

2. A transmission joint according to claim 1 characterised in that the bearing member (10, 10') is in the form of a disc of which the sliding face carries a pivot peg (15) engaged in the elastic element (6, 6').

3. A transmission joint according to claim 1 characterised in that the bearing member (20, 20') is in the form of a block member of which the sliding face rests on the bottom of a bidivergent slot (22, 22') carried by the elastic element (6, 6'), the narrowed central portion (23) thereof being in contact with the opposite side faces (23, 23') of the block member.

FIG.1

FIG.2

FIG. 3

FIG.4

# FIG. 5

# FIG.6

# FIG.7